# EUROPEAN PATENT SPECIFICATION

(11) **EP 2 781 271 B1**
(45) Date of publication and mention of the grant of the patent: **18.05.2016**
(21) Application number: 14160735.8
(22) Date of filing: 19.03.2014
(51) Int. Cl.: B08B 9/08, A01K 45/00, A22B 7/00

(54) **Plant and method for handling live poultry in a slaughterhouse**
Anlage und Verfahren zur Handhabung von Geflügel in einem Schlachthaus
Installation et procédé pour manipuler des volailles vivantes dans un abattoir

(30) Priority: 20.03.2013 IT TO20130214; 16.05.2013 IT TO20130394
(43) Date of publication of application: 24.09.2014
(73) Proprietor: Zanotti, Massimo, 25064 Gussago (BS) (IT)
(72) Inventor: Zanotti, Massimo, 25064 Gussago (BS) (IT)
(74) Representative: Buzzi, Franco

(56) References cited:
- AU-B2- 551 823
- US-A- 5 388 948
- US-A1- 2003 136 350
- US-A2- 2013 032 095

## Description

### Field of the invention

The present invention relates in general to installations for slaughtering poultry and more in particular regards a plant for handling live poultry within such an installation.

### Prior art

Traditionally, for sending the poultry from the breeding sites to the slaughterhouses, transport units are used set on board lorries, which include piles of drawer-type cages arranged on top of one another carried by supporting frames in such a way that they can be slid in and slid out. Examples of transport units of the above type are described and illustrated in the documents Nos. EP-1330952B1 and WO-2011/010329, in the latter of which the supporting frame may even be double, i.e., pre-arranged for containing two piles set side by side of drawer-type cages and has dimensions such as to occupy the entire width of the loading bed of a lorry. Document AU 551 823 B2 discloses a plant with the features of the preamble of claim 1.

When these poultry-transport units arrive at the slaughtering installation, they are unloaded from the lorry and transferred to the handling plant, which typically comprises an input station where the drawer-type cages containing the poultry are pulled out of the corresponding supporting frames, at least one transfer line for transferring the drawer-type cages through a station for stunning the poultry and a station for taking the poultry out of the drawer-type cages, and finally an output station where the drawer-type cages are slid back into a condition where they are arranged on top of one another within the supporting frames to recreate the aforesaid transport units.

The systems today known for extraction of the drawer-type cages from the supporting frames at the input station of the plant are basically of two types.

A first type consists of a vertical extractor made up of a series of horizontal poles that push simultaneously out of the supporting frame the drawer-type cages of one pile, which are then picked up by a multi-platform elevator set on the opposite side of the transfer line. This vertical extractor can operate only on one pile of drawer-type cages at a time and hence, in the case of supporting frames that contain two piles of drawer-type cages set side by side, emptying must be carried out in two successive steps and hence entails long operating time. For requirements of space of the mechanical members of the vertical extractor it is not even possible to operate simultaneously on two transport units set alongside one another, not even if they were positioned in a direction opposite to one another, on account of the encumbrance of the mechanical members. Even if two successive transport units were to be used for feeding two distinct transfer lines, the units would interfere with one another in the case of arrest of one line or the other.

The second type of system for extraction of the drawer-type cages from the supporting frames envisages a horizontal extractor, capable of pushing simultaneously two cages set at one and the same level of two piles of cages set alongside one another. In this case, the entire transport unit must thus be moved vertically to change level and stop at the next level so that the thrust can be repeated on the next two cages set at the same level. Then each movement of horizontal thrust must be alternated with a vertical displacement of the transport unit, with evident resulting complications and long operating times.

### Summary of the invention

The object of the present invention is to overcome the aforesaid drawbacks, and to provide a plant for handling poultry of the type defined in the preamble of Claim 1 that will enable an appreciable increase in the operating capacity and efficiency, and hence in the productivity of the plant.

According to the invention, the above object is achieved thanks to the fact that the aforesaid extraction means are configured for simultaneously extracting from each supporting frame all the drawer-type cages of both of the piles.

The invention may be advantageously applied to transport units in which the two piles set side by side of drawer-type cages can be slid in and slid out through two opposite sides of the supporting frame: in this case, the aforesaid extraction means of the input station are configured for pulling simultaneously the two piles of cages arranged on top of one another in opposite directions through said two opposite sides of the supporting frame.

Following upon extraction from the supporting frame, the drawer-type cages of each pile are separated from one another, for example using multi-platform elevators, along the transfer line, which, according to the invention, comprises a first conveyor and a second conveyor.

In a first embodiment of the invention, the two conveyors follow parallel and contiguous paths, and one of them is deviated laterally with respect to the other at the input station.

In a second embodiment, the first and second conveyors follow separate paths, and in this case one conveyor is set opposed with respect to the other conveyor at the input station.

In a third embodiment, the transfer line includes a single shared conveyor.

Normally, associated to the conveyor or to each conveyor is a respective gas stunner, a possible means for tipping over the drawer-type cages into a vertical condition so that they will pass through a washing station, followed by a means for repositioning the drawer-type cages in a horizontal condition so that they can be sent on to the output station, where the drawer-type cages coming from the conveyor or each conveyor are re-arranged into two piles that are then slid back in simultaneously through the opposite sides of the corresponding supporting frames.

The advantages deriving from the peculiar characteristics of the handling plant according to the invention are summarized hereinafter:
- high operating capacity and efficiency thanks to the reduction of the dead times for sliding the drawer-type cages out of and back into the supporting frames of the transport units;
- simplification in the management of the flow of the drawer-type cages, the orientation of which can be kept constant; this proves particularly advantageous in the case where the drawer-type cages have a wall configuration differentiated according to the ambient conditions of transport, as in the case of the document No. WO-2011/010329 cited above;
- possibility of operating even with just one or the other of the two conveyors of the transfer line, when envisaged, so as to enable if necessary convenient maintenance operations on the other conveyor as well as on the components of the plant associated thereto, or even temporary reduction of the overall capacity of the plant;
- possibility of operating even with a number of transport units arranged on top of one another; and
- improvement of the effectiveness of washing of the drawer-type cages and of the corresponding supporting frames, also with steps of recirculation of the washing water.

### Brief description of the drawings

The invention will now be described in detail with reference to the annexed drawings, which are provided purely by way of non-limiting example and in which:
Figure 1 is a schematic perspective view that exemplifies a unit for transport of live poultry that can be used in a plant according to the invention for handling the poultry in a slaughterhouse;
Figure 2 is a schematic perspective top plan view that shows a first embodiment of the handling plant according to the invention;
Figure 3 is a view similar to that of Figure 2 that shows the handling plant from a different angle;
Figure 4 is a view similar to those of Figures 2 and 3 that shows the handling plant from a further different angle;
Figure 5 is a schematic perspective top plan view that shows a second embodiment of the handling plant according to the invention;
Figure 6 shows the handling plant of Figure 5 from a different angle; and
Figure 7 is a schematic and partial perspective view that shows a third embodiment of the handling plant according to the invention.

### Detailed description of the invention

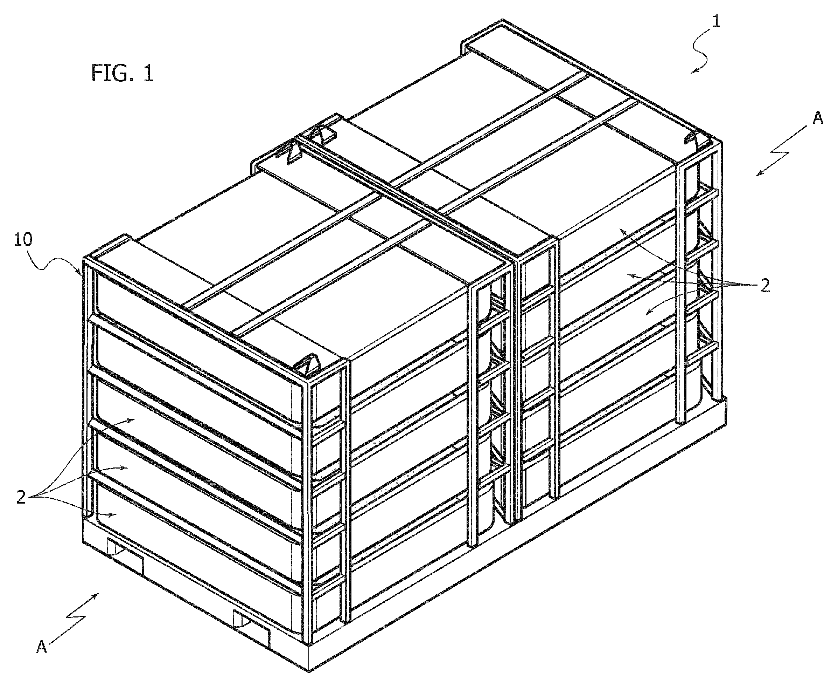

The plant for handling poultry within a slaughterhouse is, as has already been explained, suitable for operating with transport units generally of the type described and illustrated in the document No. WO-2011/010329. More in particular, the transport units, designated by 1, conveniently correspond to those described and illustrated in the Italian patent application No. T02013A000214 filed in the name of the same present applicant, not disclosed at the date of filing of the present application, one of said units 1 appearing in Figure 1. In brief said transport unit 1 comprises a sturdy quadrangular supporting frame 10 and drawer-type cages 2 open at the top and inserted in the frame 10 in a condition where they are arranged on top of one another, i.e. mutually superimposed. The drawer-type cages 2 are arranged in two piles set alongside one another, five or more in number for each pile, and are able to perform a sliding movement between a set-in position (represented in Figure 1) and an extracted position with respect to the supporting frame 10. Extraction and subsequent re-insertion of the drawer-type cages 2 are carried out through the two opposite sides, designated by A, of the supporting frame 10: normally, the drawer-type cages 2 have a rectangular shape, and said opposite sides A of the supporting frame 10 correspond to one of the minor sides of said drawer-type cages 2.

The drawer-type cages 2 may moreover be of the type with differentiated aeration, as is also described in the document No. WO-2011/010329 cited above, whereby one of the side walls of the drawer-type cage 2 is formed with ventilation openings, whereas the side wall opposite thereto is without openings.

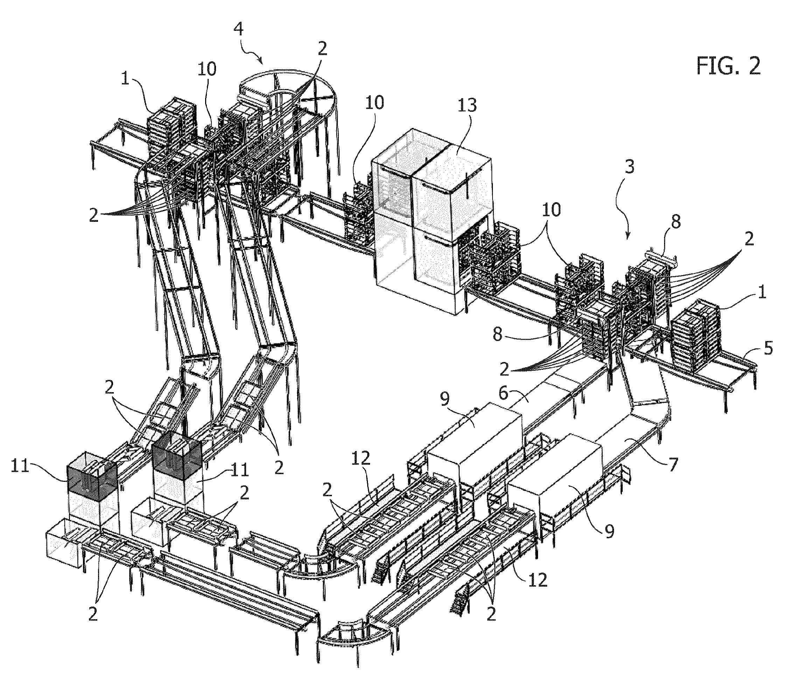

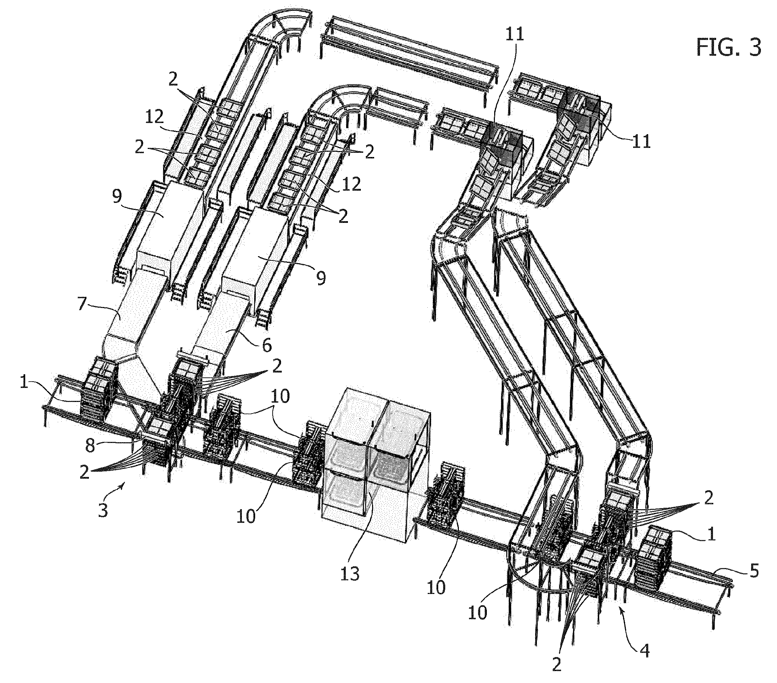

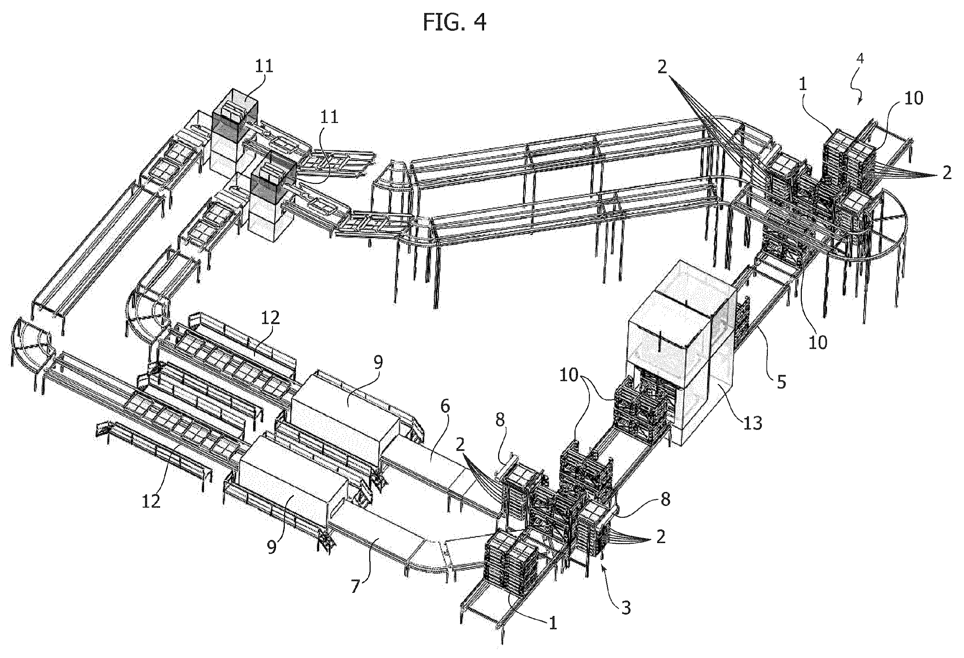

With reference now to Figures 2 to 4, in a first embodiment of the invention the plant for handling poultry within the slaughterhouse basically comprises a station 3 for input and a station 4 for output of the transport units 1, arranged between which are the various processing stations that will be described in what follows.

The input station 3 and output station 4 are interconnected by a conveyor 5, for example a motor-driven chain conveyor, deposited each time on which are the full transport units 1, entering the input station 3, and from which there are then unloaded the empty transport units 1 coming from the output station 4.

At the input station 3, the drawer-type cages 2 are each time pulled out of the corresponding supporting frames 10 and the latter then proceed, along the conveyor 5, towards the output station 4.

According to the peculiar characteristic of the invention, extraction of the drawer-type cages 2 at the input station 3 is carried out in a joint and simultaneous way for all the drawer-type cages 2 of both of the piles. Extraction takes place by pulling the drawer-type cages 2 of each pile out of the supporting frame 10 in opposite directions, through the opposite sides A mentioned above. For this operation, mechanized and motor-driven extractors 8 are provided, which for simplicity are not described in detail in so far as they are within the reach of the person skilled in the branch. These extractors 8 may consist of horizontal arms that can be displaced with reciprocating rectilinear motion, for example via fluid actuators pre-arranged for engaging the drawer-type cages 2 and sliding them out of the supporting frame 10 from opposite sides of the conveyor 5, and then releasing them starting from the lowest drawer-type cage, then moving the other cages downwards in succession. As an alternative, each extractor 8 may transfer the entire pile of the drawer-type cages 2 to a multi-platform descender/elevator.

The drawer-type cages 2 of the two piles thus pulled out are then deposited individually on two different transfer lines 6, 7: i.e., the drawer-type cages 2 of one pile are separated from one another and deposited in succession on the first transfer line 6, and the drawer-type cages 2 of the other pile are separated from one another and deposited in succession on the other conveying line 7. Separation of the drawer-type cages 2 of each pile may be carried out by the corresponding extractor 8, which for this purpose, as has been said, may present vertical movement and may be driven so as to release in succession the drawer-type cages, or else may be obtained with any other equivalent mechanized system falling within the reach of a person skilled in the branch.

In the case of the example of embodiment represented in Figures 2 to 4, the two transfer lines 6 and 7 extend along mutually parallel and contiguous paths, typically as far as the output station 4. For this purpose the second conveying line 7 is deviated with respect to the first conveying line 6, immediately downstream of the input station 3, in the way represented.

Each conveying line 6, 7 traverses a respective station 9 for gas stunning of the poultry, at exit of which the chickens are taken out of the drawer-type cages 2 at a pick-up station 12 for subsequent treatments.

The drawer-type cages 2 then proceed along both of the transfer lines 6, 7 traversing respective washing stations 11, and finally reach the output station 4.

Preferably, before entering the washing stations 11 the drawer-type cages 2 are positioned vertically and grouped together and are then again separated from one another and set again in a horizontal position after washing.

Each washing station 11 is conveniently configured in two or three sections arranged on top of one another vertically operating at different washing pressures and volumes and with recirculation of washing water from the top area to the intermediate area as far as the bottom area. In the top area the drawer-type cages 2 are sprayed with clear water at an extremely high pressure that is then recirculated for increasing the washing volume in the intermediate area, where present, and in the bottom area.

When the drawer-type cages 2 advancing along the respective transfer lines 6, 7 downstream of the washing stations 11 reach the output station 4, they are again repositioned each time in two piles, for example with the aid of mechanized and motor-driven apparatuses substantially similar to the extraction devices 8 of the input station 3, which then slide them back into the supporting frames 10 that each time are positioned in said output stations 4 by the conveyor 5. Also insertion of the two piles of drawer-type cages 2 is carried out simultaneously through the opposite sides A of the supporting frame 1, i.e., in a way opposite to their extraction at the input station 3.

The transport modules 1 thus re-assembled are finally picked up from the conveyor 5 and are then again transferred onto a lorry to return to the poultry farm.

Set along the conveyor 5, between the input station 3 and the output station 4, is a station 13 for washing the supporting frames 10. Washing is conveniently carried out in two steps in areas vertically arranged on top of one another, also in this case with differentiated pressures and volumes and recirculation of washing water.

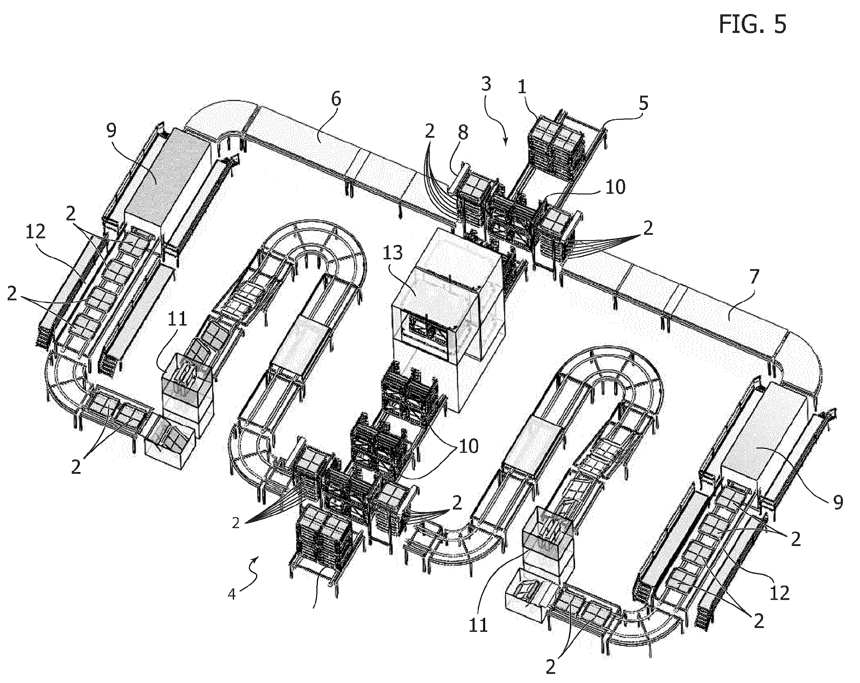

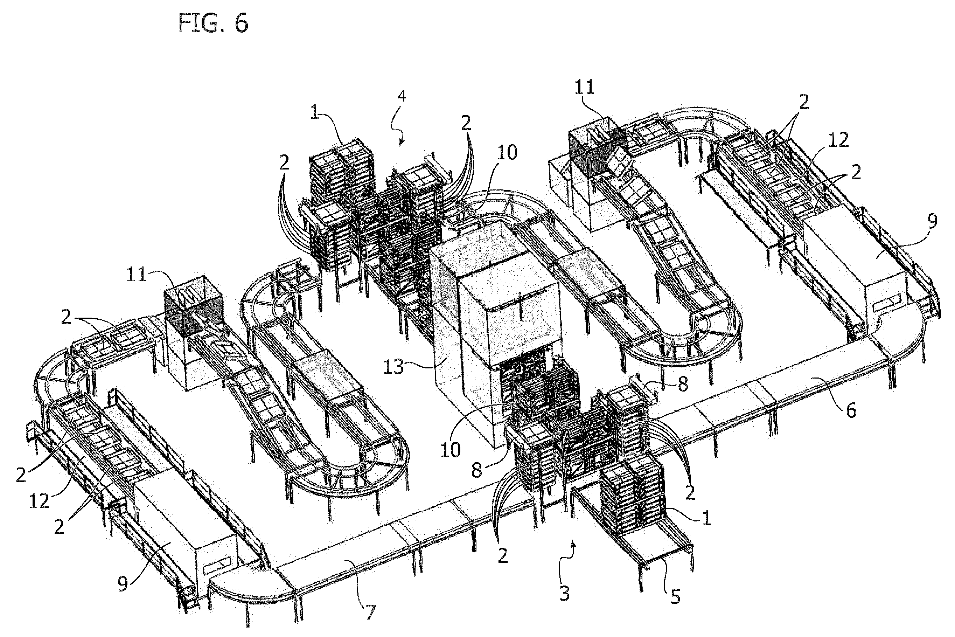

The variant of the plant represented in Figures 5 and 6 is generally similar to the embodiment described previously, and consequently the same reference numbers will be used for designating parts that are identical or similar.

This variant differs from that of the previous embodiment only in that the two transfer lines 6 and 7 of the drawer-type cages 2, corresponding to one and the other pile each time simultaneously pulled out of the corresponding supporting frames 10, extend along different paths on opposite sides with respect to the conveyor 5. In practice the conveying lines 6, 7 depart from the input station 3 in directions opposite to one another and then follow respective remote paths through the stunning station 9, the station for picking up the poultry 12, and the washing station 11, and terminate at the output station 4. The modalities of simultaneous extraction of the piles of drawer-type cages 2 from the supporting frames 10, as well as the modalities of washing and re-assembly of the transport units 1, are in this case altogether identical to the ones described previously.

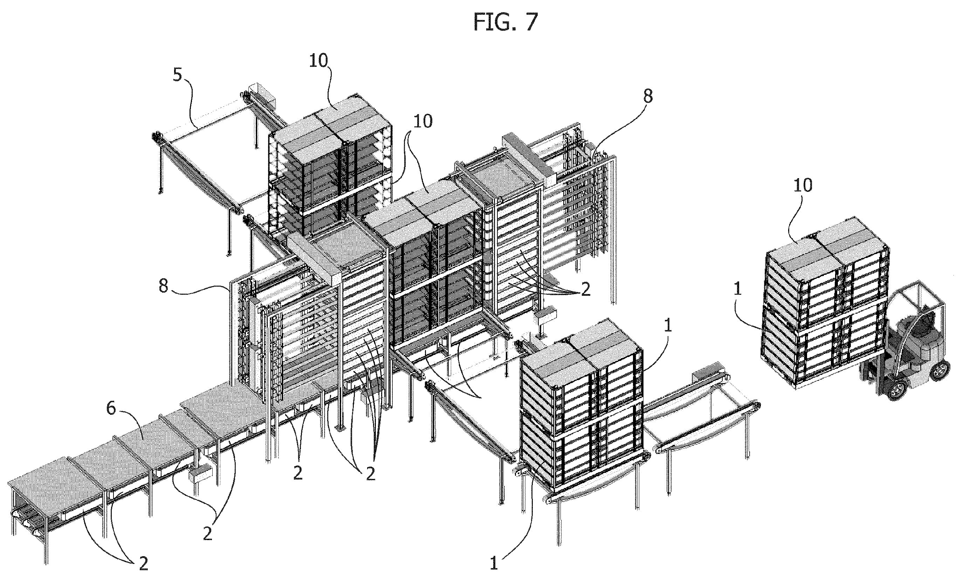

The further variant illustrated in Figure 7 differs from the foregoing embodiments in that a single shared conveying line 6 is provided, which traverses the input station 3 underneath the latter and laid on which are, on opposite sides, the drawer-type cages 2 of both of the piles of each transport unit 1. The drawer-type cages 2 deposited and separated from one another on the shared conveying line 6 then proceed along the same path towards the next stations, which in this case may comprise a single gas-stunning station 9, a single pick-up station 12, and a single washing station 11, which are altogether similar to the ones described previously.

In this case, but also in the case of the embodiments described previously, the extraction devices 8 of the input station 3 can be pre-arranged for operating each time not just on a single transport unit 1, but even on two of such transport units 1 arranged on top of one another (as emerges clearly from Figure 7) so as to enable simultaneous extraction from both of the supporting frames 10 of all the drawer-type cages 2 arranged on top of one another of the respective piles.

Of course, the details of construction and the embodiments may vary widely with respect to what has been described and illustrated herein, without thereby departing from the scope of the present invention as defined in the ensuing claims.

In particular, the paths of the two conveying lines 6, 7, where present, may differ from the ones illustrated and be adapted to the spaces available in the slaughterhouse. The solution with conveyors 6, 7 deviated or else set opposed to one another, as well as the solution with a single shared conveyor 6 provided at the input station 3, may be maintained the same or else varied for the path of return to the output station 4. In other words, to one arrangement at input there may correspond a different arrangement at output.

Moreover, in the transport units 1 used in the plant according to the invention the piles of drawer-type cages 2 may include a number of such cages that differs from the case of the examples illustrated.

Finally, it should be pointed out that the input station 3 could be configured so as to be able to pull out the drawer-type cages 2 from the corresponding supporting frames 1 directly from the lorry used for transport, i.e., without having to unload the transport units from the lorry. In this case, also the output station 4 may be configured so as to enable reintroduction of the drawer-type cages 2 into the corresponding frames 1 kept on board the lorry.

## Claims

1. A plant for handling live poultry in a slaughterhouse, wherein the poultry is sent to the slaughterhouse inside transport units (1) that include two piles set side by side of drawer-type cages (2) arranged on top of one another carried by supporting frames (10) in such a way that they can be slid in and slid out, the plant comprising an input station (3) for input of said transport units (1), which is equipped with means for extraction (8) of the drawer-type cages (2) from the corresponding supporting frames (10), at least one line for transfer (6, 7) of the drawer-type cages (2) through a poultry-stunning station (9) and a poultry-pick-up station (12) for picking up the poultry from the drawer-type cages (2), as far as an output station (4) where said drawer-type cages (2) are slid back into the condition where they are arranged on top of one another within said supporting frames (10) to form again said transport units (1), said plant being **characterized in that** said extraction means (8) are configured for simultaneously extracting from each supporting frame (10) all the drawer-type cages (2) of both of the piles.

2. The handling plant according to Claim 1, **characterized in that** said extraction means (8) of the input station (3) operate by simultaneously extracting the two piles of drawer-type cages (2) in opposite directions through two opposite sides (A) of the supporting frame (10).

3. The handling plant according to Claim 2, **characterized in that** said extraction means (8) moreover operate for separating each of the drawer-type cages (2) of each pile pulled out of the supporting frame (10) along said at least one transfer line (6, 7).

4. The handling plant according to Claim 3, **characterized in that** said transfer line comprises a first conveyor (6) and a second conveyor (7) with mutually parallel and contiguous paths, the second conveyor (7) being deviated laterally with respect to the first conveyor (6) at said input station (3).

5. The handling plant according to Claim 3, **characterized in that** said transfer line comprises a first conveyor (6) and a second conveyor (7) with mutually different paths, the second conveyor (7) being set opposed to the first conveyor (6) at said input station (3).

6. The handling plant according to Claim 3, **characterized in that** said transfer line includes a single shared conveyor (6).

7. The handling plant according to Claim 4 or Claim 5 or Claim 6, **characterized in that** associated to said conveyors (6, 7) or to each of them is a respective gas stunner (9).

8. The handling plant according to Claim 4 or Claim 5 or Claim 6, **characterized in that** associated to said conveyors (6, 7) or to each of them is a respective washing station (11) with stages arranged vertically on top of one another for washing the drawer-type cages (2) positioned and grouped together in a vertical condition.

9. The handling plant according to Claim 4 or Claim 5 or Claim 6, **characterized in that** it moreover includes a conveyor (5) for positioning in succession said transport units (1) in the input station (3) and for sending said supporting frames (10) to said output station (4) following upon extraction of the corresponding drawer-type cages (2), and **in that** said output station (4) is equipped with means (8) for restoring said transport units (1), said means (8) being configured for piling up the drawer-type cages coming from said conveyors (6, 7) or from each of them so as to recreate said two piles and slide them back in simultaneously through said opposite sides (A) of said supporting frames (10) coming from said conveyor (5).

10. The handling plant according to Claim 8, **characterized in that** it includes a washing station (13) for washing said supporting frames (10) set along said conveyor (5).

11. A method for handling poultry in a slaughterhouse, wherein the poultry is sent to the slaughterhouse inside transport units (1) that include two piles set side by side of drawer-type cages (2) arranged on top of one another carried by supporting frames (10) in such a way that they can be slid in and slid out, said method being **characterized in that**, at the start of handling, all the drawer-type cages (2) of both of the piles of each transport unit (1) are simultaneously pulled out of the respective supporting frame (10).

12. The method according to Claim 11, **characterized in that** the drawer-type cages (2) of each pile pulled out of the supporting frame (10) are separated from one another and deposited in succession on at least one conveying line (6, 7).

13. The method according to Claim 12, **characterized in that** along the conveying lines (6, 7) or along each of them the drawer-type cages (2) are grouped together in a vertical position and subjected to multiple washing stages that are arranged on top of one another vertically and operate at different washing pressures and volumes and with recirculation of washing water from the uppermost stage to the lowest stage.

14. The method according to one or more of Claims 11 to 13, **characterized in that**, at the end of handling, the drawer-type cages (2) are piled up so as to recreate said two piles which are slid back in simultaneously through said opposite sides (A) of the corresponding supporting frames (10) so as to restore said transport units (1).

## Patentansprüche

1. Anlage zur Handhabung von lebendem Geflügel in einem Schlachthaus, wobei das Geflügel innerhalb von Transporteinheiten (1) zum Schlachthaus befördert wird, die zwei nebeneinander angeordnete Stapel von übereinander liegenden schubladenartigen Käfigen (2) umfassen, die durch Tragrahmen (10) so getragen werden, dass sie ein- und ausschiebbar sind, wobei die Anlage Folgendes umfasst: eine Eingabestation (3) zur Eingabe der Transporteinheiten (1), die mit Mitteln (8) zum Herausziehen der schubladenartigen Käfige (2) aus den entsprechenden Tragrahmen (10) ausgestattet ist, zumindest eine Linie für den Transfer (6, 7) der schubladenartigen Käfige (2) durch eine Geflügelbetäubungsstation (9) und eine Geflügelentnahmestation (12) zur Entnahme des Geflügels aus den schubladenartigen Käfigen (2), soweit eine Ausgabestation (4), wo die schubladenartigen Käfige (2) in den Zustand zurückgeschoben werden, in dem sie innerhalb des Tragrahmens (10) übereinanderliegen, um wieder die Transporteinheiten (1) auszubilden, wobei die Anlage **dadurch gekennzeichnet ist, dass** die Herausziehmittel (8) für das gleichzeitige Herausziehen aller schubladenartigen Käfige (2) beider Stapel aus jedem Tragrahmen (10) gestaltet sind.

2. Handhabungsanlage nach Anspruch 1, **dadurch gekennzeichnet, dass** die Herausziehmittel (8) der Eingabestation (3) arbeiten, indem sie die beiden Stapel schubladenartiger Käfige (2) gleichzeitig in entgegengesetzte Richtungen durch zwei entgegengesetzte Seiten (A) des Tragrahmen (10) herausziehen.

3. Handhabungsanlage nach Anspruch 2, **dadurch gekennzeichnet, dass** die Herausziehmittel (8) ferner arbeiten, um jeden der aus dem Tragrahmen (10) gezogenen schubladenartigen Käfige (2) jedes Stapels entlang zumindest einer Transferlinie (6, 7) zu trennen.

4. Handhabungsanlage nach Anspruch 3, **dadurch gekennzeichnet, dass** die Transferlinie einen ersten Förderer (6) und einen zweiten Förderer (7) mit zueinander parallelen und benachbarten Bahnen umfasst, wobei an der Eingabestation (3) der zweite Förderer (7) in Bezug auf den ersten Förderer (6) seitlich abgelenkt wird.

5. Handhabungsanlage nach Anspruch 3, **dadurch gekennzeichnet, dass** die Transferlinie einen ersten Förderer (6) und einen zweiten Förderer (7) mit zueinander verschiedenen Bahnen umfasst, wobei an der Eingabestation (3) der zweite Förderer (7) dem ersten Förderer (6) entgegengesetzt angeordnet ist.

6. Handhabungsanlage nach Anspruch 3, **dadurch gekennzeichnet, dass** die Transferlinie einen einzelnen geteilten Förderer (6) enthält.

7. Handhabungsanlage nach Anspruch 4 oder Anspruch 5 oder Anspruch 6, **dadurch gekennzeichnet, dass** den Förderern (6, 7) oder jedem von ihnen eine jeweilige Gasbetäubungseinrichtung (9) zugeordnet ist.

8. Handhabungsanlage nach Anspruch 4 oder Anspruch 5 oder Anspruch 6, **dadurch gekennzeichnet, dass** den Förderern (6, 7) oder jedem von ihnen eine jeweilige Waschstation (11) mit vertikal übereinanderliegenden Stufen zum Waschen der in einem vertikalen Zustand positionierten und zusammengefassten schubladenartigen Käfige (2) zugeordnet ist.

9. Handhabungsanlage nach Anspruch 4 oder Anspruch 5 oder Anspruch 6, **dadurch gekennzeichnet, dass** sie ferner einen Förderer (5) umfasst, um die Transporteinheiten (1) in der Eingabestation (3) hintereinander zu positionieren und um die Tragrahmen (10) nach dem Herausziehen der entsprechenden schubladenartigen Käfige (2) zur Ausgabestation (4) zu befördern, und dadurch, dass die Ausgabestation (4) mit Mitteln (8) zum Wiederherstellen der Transporteinheiten (1) ausgestattet ist, wobei die Mittel (8) gestaltet sind, die von den Förderern (6, 7) oder von jedem von ihnen kommenden schubladenartigen Käfige aufeinanderzustapeln, um die beiden Stapel wiederaufzubauen, und diese gleichzeitig durch die entgegengesetzten Seiten (A) des vom Förderer (5) kommenden Tragrahmens (10) zurückzuschieben.

10. Handhabungsanlage nach Anspruch 8, **dadurch gekennzeichnet, dass** sie eine Waschstation (13) zum Waschen der entlang des Förderers (5) angeordneten Tragrahmen (10) umfasst.

11. Verfahren zur Handhabung von Geflügel in einem Schlachthaus, wobei das Geflügel innerhalb von Transporteinheiten (1) zum Schlachthaus befördert wird, die zwei nebeneinander angeordnete Stapel von übereinanderliegenden schubladenartigen Käfigen (2) enthalten, die durch Tragrahmen (10) so getragen werden, dass sie ein- und ausschiebbar sind, wobei das Verfahren **dadurch gekennzeichnet ist, dass** zu Beginn der Handhabung alle schubladenartigen Käfige (2) beider Stapel jeder Transporteinheit (1) gleichzeitig aus den jeweiligen Tragrahmen (10) gezogen werden.

12. Verfahren nach Anspruch 11, **dadurch gekennzeichnet, dass** die aus dem Tragrahmen (10) herausgezogenen schubladenartigen Käfige (2) jedes Stapels voneinander getrennt und hintereinander auf zumindest einer Förderlinie (6, 7) abgelegt werden.

13. Verfahren nach Anspruch 12, **dadurch gekennzeichnet, dass** die schubladenartige Käfige (2) entlang der Förderlinien (6, 7) oder entlang einer von ihnen in einer vertikalen Position zusammengefasst und mehreren Waschstufen unterzogen werden, die vertikal übereinanderliegen und mit verschiedenen Sprühdrücken und -volumina sowie mit Rezirkulation von Waschwasser von der obersten Stufe bis zur untersten Stufe arbeiten.

14. Verfahren nach einem oder mehreren der Ansprüche 11 bis 13, **dadurch gekennzeichnet, dass** am Ende der Handhabung die schubladenartigen Käfige (2) aufeinandergestapelt werden, um die beiden Stapel wiederaufzubauen, die gleichzeitig durch die entgegengesetzten Seiten (A) des entsprechenden Tragrahmens (10) zurückgeschoben werden, um die Transporteinheiten (1) wiederherzustellen.

## Revendications

1. Installation pour manipuler des volailles vivantes dans un abattoir, dans laquelle la volaille est envoyée à l'abattoir dans des unités de transport (1) qui comprennent deux piles placées côte à côte de cages de type à tiroir (2) agencées les unes au-dessus des autres, portées par des bâtis de support (10) de sorte qu'elles peuvent être coulissées à l'intérieur et à l'extérieur, l'installation comprenant une station d'entrée (3) pour l'entrée desdites unités de transport (1), qui est équipée de moyens pour l'extraction (8) des cages de type à tiroir (2) des bâtis de support (10) correspondants, au moins une ligne pour le transfert (6, 7) des cages de type à tiroir (2) par une station d'étourdissement de volaille (9) et une station de prélèvement de volaille (12) pour prélever la volaille des cages de type à tiroir (2), jusqu'à une station de sortie (4) où lesdites cages de type à tiroir (2) sont coulissées à nouveau dans la condition dans laquelle elles sont agencées les unes au-dessus des autres dans lesdits bâtis de support (10) afin de former à nouveau lesdites unités de transport (1), ladite installation étant **caractérisée en ce que** lesdits moyens d'extraction (8) sont configurés pour extraire simultanément de chaque bâti de support (10), toutes les cages de type à tiroir (2) des deux piles.

2. Installation de manipulation selon la revendication 1, **caractérisée en ce que** lesdits moyens d'extraction (8) de la station d'entrée (3) fonctionnent en extrayant simultanément les deux piles de cages de type à tiroir (2) dans des directions opposées par les deux côtés opposés (A) du bâti de support (10).

3. Installation de manipulation selon la revendication 2, **caractérisée en ce que** lesdits moyens d'extraction (8) fonctionnent de plus pour séparer chacune des cages de type à tiroir (2) de chaque pile retirée du bâti de support (10) le long de ladite au moins une ligne de transfert (6, 7).

4. Installation de manipulation selon la revendication 3, **caractérisée en ce que** ladite ligne de transfert comprend un premier transporteur (6) et un second transporteur (7) avec des trajectoires mutuellement parallèles et contiguës, le second transporteur (7) étant dévié latéralement par rapport au premier transporteur (6) au niveau de ladite station d'entrée (3).

5. Installation de manipulation selon la revendication 3, **caractérisée en ce que** ladite ligne de transfert comprend un premier transporteur (6) et un second transporteur (7) avec des trajectoires mutuellement différentes, le second transporteur (7) étant placé à l'opposé du premier transporteur (6) au niveau de ladite station d'entrée (3).

6. Installation de manipulation selon la revendication 3, **caractérisée en ce que** ladite ligne de transfert comprend un transporteur partagé unique (6).

7. Installation de manipulation selon la revendication 4 ou la revendication 5 ou la revendication 6, **caractérisée en ce que**, associé auxdits transporteurs (6, 7) ou à chacun d'entre eux, on trouve un dispositif d'étourdissement à gaz (9) respectif.

8. Installation de manipulation selon la revendication 4 ou la revendication 5 ou la revendication 6, **caractérisée en ce que**, associée auxdits transporteurs (6, 7) ou à chacun d'entre eux, on trouve une station de lavage (11) respective avec des étages agencés verticalement les uns sur les autres pour laver les cages de type à tiroir (2) positionnées et regroupées dans une condition verticale.

9. Installation de manipulation selon la revendication 4 ou la revendication 5 ou la revendication 6, **caractérisée en ce qu'**elle comprend de plus un transporteur (5) pour positionner en succession lesdites unités de transport (1) dans la station d'entrée (3) et pour envoyer lesdits bâtis de support (10) à ladite station de sortie (4) après l'extraction des cages de type à tiroir (2) correspondantes, et **en ce que** ladite station de sortie (4) est équipée avec des moyens (8) pour restaurer lesdites unités de transport (1), lesdits moyens (8) étant configurés pour empiler les cages de type à tiroir provenant desdits transporteurs (6, 7) ou de chacun d'entre eux afin de recréer lesdites deux piles et les ramener par coulissement simultanément par lesdits côtés opposés (A) desdits bâtis de support (10) dudit transporteur (5).

10. Installation de manipulation selon la revendication 8, **caractérisée en ce qu'**elle comprend une station de lavage (13) pour laver lesdits bâtis de support (10) placés le long dudit transporteur (5).

11. Procédé pour manipuler des volailles dans un abattoir, dans lequel la volaille est envoyée vers l'abattoir dans des unités de transport (1) qui comprennent deux piles placées côte à côte des cages de type à tiroir (2) agencées les unes sur les autres, portées par des bâtis de support (10) de sorte qu'elles peuvent être coulissées à l'intérieur et à l'extérieur, ledit procédé étant **caractérisé en ce que**, au début de la manipulation, toutes les cages de type à tiroir (2) des deux piles de chaque unité de transport (1) sont simultanément retirées du bâti de support (10) respectif.

12. Procédé selon la revendication 11, **caractérisé en ce que** les cages de type à tiroir (2) de chaque pile retirées du bâti de support (10) sont séparées les unes des autres et déposées en succession sur au moins une ligne de transport (6, 7).

13. Procédé selon la revendication 12, **caractérisé en ce que**, le long des lignes de transport (6, 7) ou le long de chacune d'entre elles, les cages de type à tiroir (2) sont regroupées dans une position verticale et soumises à plusieurs étages de lavage qui sont agencés les uns sur les autres verticalement et fonctionnent à différentes pressions et différents volumes de lavage et avec la recirculation de l'eau de lavage de l'étage le plus haut jusqu'à l'étage le plus bas.

14. Procédé selon une ou plusieurs des revendications 11 à 13, **caractérisé en ce que**, à la fin de la manipulation, les cages de type à tiroir (2) sont empilées afin de recréer lesdites deux piles qui sont ramenées par coulissement simultanément par lesdits côtés opposés (A) des bâtis de support (10) correspondants afin de restaurer lesdites unités de transport (1).
